# EUROPEAN PATENT APPLICATION

(11) **EP 1 583 324 A1**
(43) Date of publication of application: **05.10.2005**
(21) Application number: 05251889.1
(22) Date of filing: 24.03.2005
(51) Int. Cl.: H04L 29/06

(54) **Denial of service protection through port hopping**

(30) Priority: 31.03.2004 US 558614 P; 27.09.2004 US 951466
(71) Applicant: Avaya Technology Corp., Basking Ridge, NJ 07920 (US)
(72) Inventor: Brand, Thomas Erwin, Marsfield, NSW 2122 (AU); Buckley, Siobhan, Sydney, NSW 2041 (AU); Runcie, Peter D., Bilgola Plateau, NSW 2107 (AU); Scholte, Alexander Martin, Chatswood, NSW 2067 (AU); Warta, Ralph, Lane Cove, NSW 2066 (AU)
(74) Representative: Williams, David John

(57) **Abstract**

The present invention is directed to protecting network resources from unauthorized data packet streams. In particular, embodiments of the present invention provide for a port hopping arrangement in which a port pair associated with a communication channel is changed intermittently or periodically. In order to prevent the loss of authorized data packets due to network delay and jitter, a period of overlap during which a port and a successive port both accept data packets may be provided. Ports may be selected for use by providing endpoints to a communication with a common algorithm and seed value.

## Description

### FIELD OF THE INVENTION

The present invention is related to protecting packet data networks from denial of service attacks or events resulting in a denial of service. In particular, the present invention relates to coordinated port hopping in order to protect a receiving device from being disabled by a flood of unauthorized data packets.

### BACKGROUND OF THE INVENTION

Packet data processors, including media packet processors such as voice over Internet protocol (VoIP) gateways, T.38 fax gateways and VoIP conference bridges are vulnerable to denial of service attacks on user datagram protocol (UDP) or other ports open for active channels. As used herein, "port" refers to a number field in a network protocol that is used for demultiplexing at a particular layer. Accordingly, in addition to the UDP port field, other examples of ports include the TCP port field and SCTP port field. In particular, since these ports are "open," packets arriving on them are accepted, at least initially, even if they are not actually part of an authorized media stream. In order to identify packets that do not originate from a trusted source, the packets can be authenticated. However, authenticating a packet is not trivial in terms of processing and memory requirements. Accordingly, the receipt of a large number of rogue or malicious data packets can cause a resource to become unable to perform its intended functions.

The effect of a malicious or rogue stream of packets is especially burdensome on devices that, in order to meet cost constraints, are carefully sized to handle an expected packet stream. For example, an Internet protocol (IP) telephone typically has a processor and memory resources that allow it to handle a single stream of real-time protocol (RTP) packets, but that do not allow it to simultaneously authenticate and discard a stream of malicious or rogue packets. Accordingly, a stream of malicious packets sent as part of a denial of service attack, or a stream of rogue packets from a misbehaving device, can cause such a device to become unable to perform its intended functions.

An enhancement to standard RTP is secure RTP. Secure RTP provides privacy through payload encryption, and authentication through digital certificates. Accordingly, secure RTP allows a device to positively confirm the source of every received data packet. However, secure RTP does not solve the problem of enabling devices having limited resources to continue functioning even while a malicious or rogue stream of data packets is being received.

In order to prevent a burst of traffic at a port on a gateway from overwhelming associated resources, traffic shaping schemes have been developed. In particular, such schemes attempt to control the rate at which data packets arrive at a port. Traffic shaping can be implemented through a leaky bucket arrangement, in which data packets are collected in a buffer and then metered out to the data port periodically. When the buffer is entirely full, any additional data packets arriving at the port will be lost. In addition, the leaky-bucket type arrangement has no provision for adjusting the rate at which data packets are allowed to pass to the port. Another type of traffic shaping mechanism is the token bucket mechanism. According to a token bucket scheme, the bucket is filled with tokens at a predetermined rate. The maximum number of tokens that can be contained by the bucket at an instant in time defines the burst size. As data packets arrive at a port, a queue regulator requests a token for the packet. If a token is available, the data packet is allowed to pass through the port. If a token is not available, the data packet may be queued at the interface between the port and the communication network over which the data packet arrived. Although such schemes have application to gateways, they do not solve the problem of limited resources and maintaining availability with respect to a single communication channel experienced by terminal devices. In particular, such schemes require that each packet passed to the port be authenticated.

### SUMMARY OF THE INVENTION

The present invention is directed to solving these and other problems and disadvantages of the prior art. According to embodiments of the present invention, the communication devices participating in a communication periodically or intermittently change the port number over which data packets are accepted. Accordingly, a malicious or rogue stream of data packets (or packets) directed to a particular port that is no longer active will be rejected, without requiring the receiving device to authenticate a large number of the malicious or rogue packets. As can be appreciated by one of skill in the art from the description provided herein, a simple value comparison of a protocol field such as a port number is less resource intensive than is formal authentication.

The selection of a new port number may be accomplished by running identical pseudo-random number generator algorithms on the receiving and sending devices, which are provided with identical seed values, and generating a new port number at predetermined intervals. A new port number may also be selected from a table known to both ends of a communication, either randomly or according to a predetermined sequence. As a further example, a new port number may be securely communicated by one of the endpoints to another of the endpoints. In accordance -with -still -other embodiments of the present invention, a new port number may be selected using a predetermined progression that is known to the endpoints.

In accordance with embodiments of the present invention, a new port number may be generated or selected periodically. In accordance with further embodiments of the present invention, a new port number may be generated or selected in response to a signal generated by a node participating in the communication. The period of time during which a port is open (or valid) may overlap with the period of time during which the next port is open (or valid). By providing overlap, jitter, clock skew and network delays can be accommodated. In accordance with embodiments of the present invention, a process of synchronization may be performed to accommodate clock skew between devices.

Additional features and advantages of the present invention will become more readily apparent from the following discussion, particularly when taken together with the accompanying drawings.

### BRIEF DESCRIPTION OF THE DRAWINGS

**Fig. 1** is a block diagram of a communication arrangement in accordance with an embodiment of the present invention;
**Fig. 2** is a block diagram of a communication device in accordance with an embodiment of the present invention;
**Fig. 3A** is a flow chart illustrating aspects of the operation of a sender state machine in accordance with embodiments of the present invention;
**Fig. 3B** is a flow chart illustrating aspects of the operation of a receiving state machine in accordance with embodiments of the present invention; and
**Fig. 4** is a timeline depicting the status of data ports in accordance with embodiments of the present invention.

### DETAILED DESCRIPTION

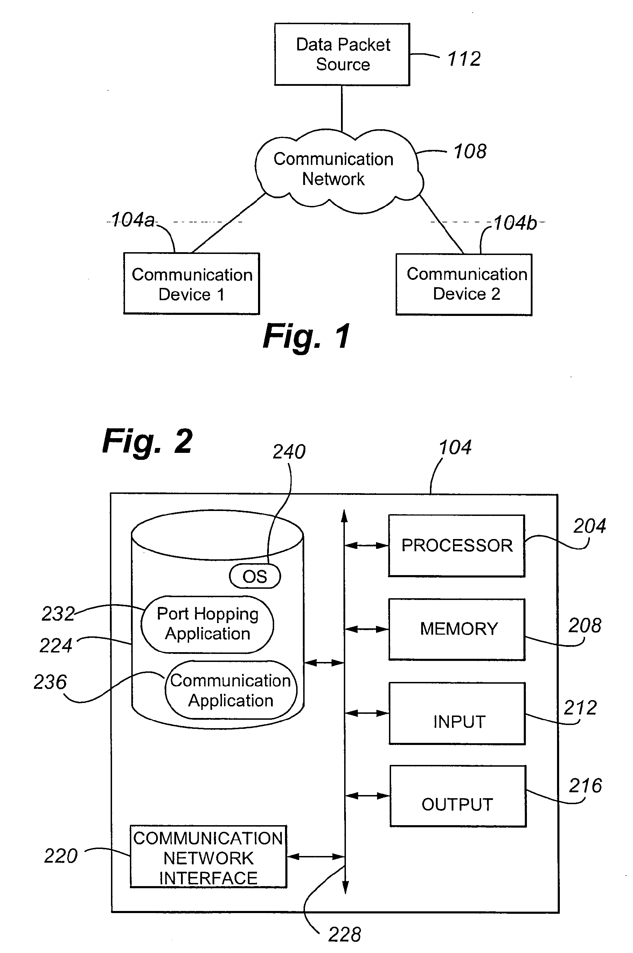

The present invention is related to preserving communication device functionality in the presence of a malicious or rogue data packet stream. With reference now to **Fig. 1**, a communication system 100- that may include a port hopping system in accordance with embodiments of the present invention may include a number of communication devices or endpoints 104 that are each interconnected to and in communication with one another over a communication network 108. Although two communication devices 104a and 104b are illustrated in **Fig. 1,** it should be appreciated that any number of communication devices 104 may be included in the communication system 100. In addition, the communication system 100 may include a data packet source 112 that is not a party to a communication between the communication devices 104. Although a single data packet source 112 is shown in **Fig. 1**, multiple data packet sources may be interconnected to the communication network 108.

In general, each communication device 104 may comprise a general purpose computer or a packet data communication device. For example, a communication device 104 may comprise an Internet protocol (IP) telephone. As another example, a communication device 104 may comprise a general purpose computer implementing an IP telephone. As still another example, a communication device 104 may comprise a network gateway. During a communications session a sending communication device 104 may implement a sender state machine as described herein, and a receiving communication device 104 may implement a receiver state machine as also described herein.

The communication network 108 may comprise one or more networks capable of carrying data, which may include real-time data, between communication devices 104, or between a data packet source 112 and one or more communication devices 104. Accordingly, the communication network 108 may comprise a computer network, including a local area network (LAN), a wide area network (WAN), a private intranet, or the Internet. In addition, the communication network 108 may comprise a public switched telephone network or wireless communication network. Furthermore, the communications network 108 may comprise a combination of a number of different networks.

The data packet source 112 may comprise any source of data packets interconnected to the communication network 108. In particular, the data packet source may be a source of data packets that may be addressed to a port of a communication device 104. Furthermore, although the data packets within a stream sent by the data packet source 112 may be addressed to a port of a communication device 104, they are not part of an authorized data stream. Accordingly, an example of a data packet source 112 is a device or devices under the control of a hacker that is sending a malicious stream of data packets. For instance, the stream of data packets may be sent with the intention of preventing a target communication device 104 or an associated device from performing its intended functions. That is, the data packet source 112 may be associated with a denial of service (DoS) attack. As another example, the data packet source 112 may be an insane or otherwise misbehaving device that is repeatedly sending data packets to a communication device 104. Accordingly, a misbehaving source of data packets 112 may not be operated with an intent to prevent a receiving device from performing its normal functions. However, it still is important for the receiving communication device 104 to protect itself against such a stream, in order to preserve the device's 104 ability to perform its intended functions.

With reference now to **Fig. 2**, components of a communication device 104 in accordance with embodiments of the present invention are depicted in block diagram form. In general, a communication device 104 may include a processor 204, memory 208, an input device 212, an output device 216, a communication network interface 220, and data storage 224. A communication bus 228 may also be provided to enable communications between the various components.

The processor 204 may include any general purpose programmable processor or controller 204 for executing application programming or instructions. Alternatively, the processor 204 may comprise a specially configured application specific integrated circuit (ASIC). The processor 204 generally functions to run programming code implementing various of the functions performed and/or state machines implemented by the communication device 104, including the port hopping operations described herein. The memory 208 may be provided for use in connection with the execution of the programming, and for the temporary or long-term storage of data or program instructions. The memory 208 may comprise solid state memory, such as DRAM and SDRAM. Where the processor 204 comprises a controller, the memory 208 may be integral to the processor.

A communication device 104 may additionally include one or more input devices 212 and one or more output devices 216. As can be appreciated by one of skill in the art, examples of input devices 212 that may be provided as part of a communication device include a microphone, numeric keypad, keyboard, and a pointing device. As can also be appreciated by one of skill in the art, examples of output devices 216 include a speaker, a headphone, and/or a visual display.

A communication network interface 220 may also be provided for interconnecting a communication device 104 to the communication network 108. Accordingly, the communication network interface is generally determined by the particular type of communication network 108 to which the communication device 104 is interconnected. For example, the communication network interface 220 may comprise an Ethernet interface.

The data storage 224 may store any number of applications, including a port hopping application 232 in accordance with embodiments of the present invention. The data storage 224 may also store a communication application 236. In addition, operating system programming 240 may be stored in data storage 224, as well as any other applications or data that is stored as part of the operation of a communication device 104. The data storage 224 may include magnetic storage devices, solid state storage devices, optical storage devices, logic circuits, or any combination of such devices. It should further be appreciated that the programs and data that may be maintained in the data storage 224 can comprise software, firmware or hard wired logic, depending on the characteristics of the data storage 224.

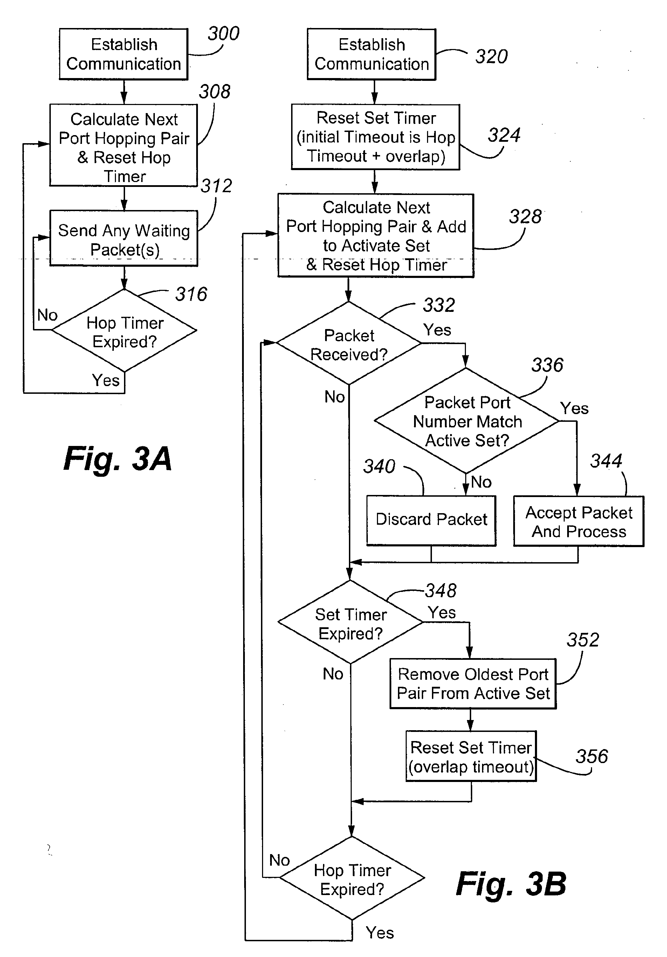

With reference now to **Figs. 3A and 3 B**, aspects of the operation of a port hopping system in accordance with embodiments of the present invention are illustrated. In particular, Fig. 3A illustrates aspects of the operation of a sender state machine in accordance with embodiments of the present invention, while Fig. 3B illustrates aspects of the operation of a receiver state machine in accordance with embodiments of the present invention. As can be appreciated by one of skill in the art from the description provided herein, during a communications session, a first communication device 104 operating as a sending device implements a sender state machine as illustrated in **Fig. 3A,** while the receiving communication device 104 implements a receiver state machine as illustrated in **Fig. 3B.**

With respect to the sending of data during a communications session in accordance with embodiments of the present invention, and as illustrated in **Fig. 3A,** a communication channel is established between communication endpoints 104 using a first port number pair (step 300). As can be appreciated by one of skill in the art, in a typical implementation, the port number pair comprises a user datagram protocol (UDP) port number pair. As can further be appreciated by one of skill in the art, the communication channel may be established using a real time protocol (RIP), for example where the communication channel is supporting a real time audio and/or video communication. It should also be appreciated that the present invention is not limited to use in connection with UDP and RTP data streams. Instead, embodiments of the present invention have application to any communication system in which data packets are addressed to ports established on endpoints.

A next port number pair is then calculated or generated by the sending communications device, and the hop timer is reset (step 308). The hop timer maintained by the sending communication device 104 is used to track or set the amount of time (t_{active}) during which packets will be sent to a port number. That is, the hop timer determines the time until a next port number is to be generated.

In accordance with embodiments of the present invention, the next port number pair is generated randomly or pseudo randomly. For instance, embodiments of the present invention may provide an algorithm for generating pseudo random numbers to all of the communication endpoints 104, together with a common seed value. Operation of the algorithms on the different communication devices 104 may then be synchronized, so that the same pseudo random number can be obtained at each of the endpoints 104. The algorithm used for generating port numbers and the seed value may be pre-provisioned in the communication devices 104. Alternatively, the algorithm and/or the seed value may be provided to, agreed upon or exchanged by the communication devices 104 when a communication channel between the devices 104 is established. The algorithm may be selected or constrained so that values within a valid range of port numbers or identifiers are calculated by the algorithm.

In accordance with still other embodiments of the present invention, the next port number pair may be obtained by referencing a table maintained on or provided to each of the communication devices 104 that are party to a communication channel. Alternatively, next port numbers may be obtained by moving through the table in a predetermined order. As yet another example, port numbers may be selected from a table at random or pseudo randomly. A next port number may also be selected by one of the communication devices 104, and communicated to the other communication endpoint or endpoints 104 using a secure transport means, such as an encrypted data packet. Accordingly, as can be appreciated by one of skill in the art from_the description provided herein, the selection of the next port number is not restricted to any particular method. However, the selection of a next port number should be synchronized in some way so that each endpoint 104 of a communication channel selects the same next port number during the same period of time.

At step 312, any waiting packets are sent to the receiving communication device 104 using the active port. A determination is then made as to whether the hop timer has expired (step 316). If the hop timer has not expired, any packets waiting to be sent continue to be directed to the previously calculated port (step 312). If the hop timer has expired, the sender state machine running on the sending communication device 104 returns to step 308, to calculate a next port hopping pair, and to reset the hop timer.

With reference now to **Fig. 3B,** the operation of a receiver state machine running on a receiving communication device 104 is illustrated. Initially, at step 320, communication is established with the sending communication device 104. Accordingly, it can be appreciated that steps 300 and 320 are performed substantially simultaneously and are complementary to one another. At step 324, a set timer maintained by the receiving communication device 104 is reset. In general, at step 324 the initial value of the set timer is equal to the initial value of the hop timer (t_{active}) maintained by the sending communication device 104 plus an additional period of overlap (toverlap).

At step 328, a next port hopping pair is calculated or generated by the receiving communication device, and that port hopping pair is added to the active port set. Also at step 328, the hop timer is reset. As can be appreciated by one of skill in the art from the description provided herein, the receiver state machine running on the receiving communication device 104 uses the same method of generating the next port hopping pair as is used by the sender state machine running on the sending communication device 104. For example, the same algorhithm and seed value, or the same table of ports, is applied by both the sending and receiving communication devices 104.

At step 332, a determination is made as to whether a data packet has been received by the receiving communication device 104. If a data packet has been received, a determination is then made as to whether the port to which the received packet is addressed matches an active port set (step 336). If the received data packet is not addressed to an active port, the packet is discarded (step 340). Alternatively, if the data packet is addressed to an active port, the packet is accepted by the receiving communication device 104 and processed by that communication device 104 (step 344). After determining that a packet has not been received (at step 332) discarding a packet (at step 340) or accepting and processing a packet (step 344), a determination is made as to whether the set timer has expired (step 348). If the set timer has expired, the oldest port pair is removed from the active set (step 352). The set timer is then reset (step 356). When the set timer is reset, the value loaded into the timer is equal to tₛₑₜ. In general, the particular value used as tₛₑₜ is selected so that a period of overlap (tₒᵥₑᵣₗₐₚ) is provided between at least two port pairs, in order to account for jitter and network delay.

In particular, because data packets sent by a first communication device 104 are not immediately received by a second communication device, time should be allowed for a data packet sent to a previously active port to arrive at the destination communication device 104. In accordance with embodiments of the present invention, the period of overlap can be adjusted to accommodate different network conditions. For example, an estimate of jitter or network delay provided by a jitter buffer associated with a communication device 104 or with another network node associated with the communication channel may be used to adjust the period of overlap. In general, the period of overlap should be long enough to allow for authorized data packets to be delivered to the receiving communication device 104. Furthermore, the period of overlap should not be excessively long, to limit the amount of time that a rogue or malicious data stream may have access to a communication device 104 through any one data port.

As can be appreciated by one of skill in the art, a data packet addressed to an inactive port of a communication device 104 can be discarded by the communication device 104, without further analysis of the data packet. Accordingly, a data packet addressed to an inactive port can be discarded by a communication device 104 using much fewer communication device 104 resources (*e.g.*, processor 204 resources) than a data packet addressed to an active (or valid) port but is then found to fail authentication checks. Accordingly, embodiments of the present invention preserve resources of a communication device 104, even where a rogue or malicious data stream is directed to that communication device 104, allowing the communication device 104 to maintain all or substantially all of its intended functionality. As used herein, substantially all of a communication device's 104 functionality is maintained if the device 104 remains available for its -intended functions at least 90% of the time.

As can be appreciated by one of skill in the art from the description provided herein, the port number is changed periodically in order to limit the effect of a rogue or malicious data stream on a communication device 104. By way of example, if a communication device 104 has 100 different ports that can be assigned to a communication channel, and if a malicious or rogue data stream is received on only one of those channels, then assuming an equal distribution of data packets among the available ports, only 1% of the authorized data stream will be coincident with the receipt of unauthorized data packets. Furthermore, by selecting a relatively short period of time during which a data port is active (*i.e.*, by selecting a relatively short dwell time (t_{dwell})) and where a suitably large number of ports can be selected, the number of authorized data packets that are not successfully received by a communication endpoint 104 due to interference from unauthorized data packets (*i.e.*, due to the effective loss of the communication device 104 as a result of authenticating packets from an unauthorized data stream) may be limited. In general, the selection of a dwell time will depend on the particular characteristics of the protocol used for the authorized data stream and the communication network 108 itself. For purposes of illustration, a port number may have a dwell time of about one second or less.

Embodiments of the present invention may use port hopping for all communications. In accordance with other embodiments, the port hopping capabilities may be activated or deactivated in response to settings selected by a user or administrator. In accordance with still other embodiments of the present invention, port hopping may be activated when an unauthorized stream of data packets is detected.

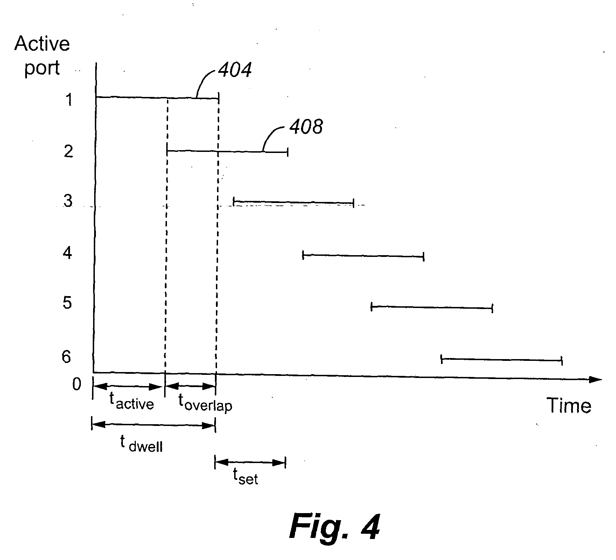

With reference now to **Fig. 4**, the relationship between the dwell times of different ports over time in accordance with embodiments of the present invention is illustrated. In the example of **Fig. 4,** at time zero port 1 is active for a total period of time equal to t_{DWELL}, as represented by bar 404. Also, the initial value of the set timer is equal to t_{dwell}. As seen in the figure, the dwell time of the first port overlaps with the dwell time associated with the second active port, represented by bar 408. The period during which both the first port and the second port are open to receive data packets is the period of overlap, shown as tₒᵥₑᵣₗₐₚ. Accordingly, the dwell time of a port is comprised of a first segment, shown as t_{active} and a second segment shown as tₒᵥₑᵣₗₐₚ. The period t_{active} represents the-period-of time during which data packets are sent by a sending communication device 104 to a receiving communication device 104 using that port number, and accordingly is equal to the value used to reset the hop timer. The period of time shown as tₒᵥₑᵣₗₐₚ allows those packets sent to a port during the active period for that port time to arrive at the communication device. However, once tₒᵥₑᵣₗₐₚ for a port has begun, any data packets then sent are addressed to the next active port. After the period t_{dwell} has expired for this first port pair, the set timer is reset using the value tₛₑₜ. As noted above, when the set timer expires, the oldest active port pair is deactivated such that packets addressed to that port are no longer accepted at the receiving communication device 104.

Although the periods during which data packets will be received at a port are shown in **Fig. 4** as being equally long, embodiments of the present invention are not so limited. For instance, the period of time during which any one port pair is active can be adjusted in response to an actual or perceived threat of an unauthorized data stream. As a further example, a single port may be active continuously, at least until an unauthorized data stream is detected or threatened. In addition, although the period of overlap between a port that had been the active port and the successive port is shown as being fixed in **Fig. 4**, embodiments of the present invention are not so limited. For instance, where feedback from a jitter buffer is available, the period of overlap between an active port and a successive port can be adjusted in accordance with estimates provided by the jitter buffer.

In addition, although **Fig. 4** illustrates overlap between two ports at one time, it should be appreciated that embodiments of the present invention are not so limited. For instance, where relatively large periods of network delay or jitter are experienced and/or port dwell time is relatively short, more than two ports may be open at any one point in time. For example, in accordance with embodiments of the present invention, a receiving communication device 104 may listen on the last, current and next port for packets.

The foregoing discussion of the invention has been presented for purposes of illustration and description. Further, the description is not intended to limit the invention to the form disclosed herein. Consequently, variations and modifications commensurate with the above teachings, within the skill and knowledge of the relevant art, are within the scope of the present invention. The embodiments described hereinabove are further intended to explain the best mode presently known of practicing the invention and to enable others skilled in the art to utilize the invention in such or in other embodiments and with various modifications required by their particular application or use of the invention. It is intended that the appended claims be construed to include the alternative embodiments to the extent permitted by the prior art.

## Claims

1. A method for protecting services, comprising:
selecting a first port number;
accepting data packets addressed to said first port number at a first communication device during a first period of time and during a first communication session;
selecting a second port number; and
accepting data packets addressed to said second port number at said first communication device during a second period of time and during said first communication session.

2. The method of Claim 1, wherein said first period of time partially overlaps with said second period of time.

3. The method of Claim 1, wherein said first period of time has a length that is equal to a length of said second period of time.

4. The method of Claim 1, further comprising discarding data packets addressed to said first port number received outside of said first period of time.

5. The method of Claim 1, wherein said selecting a second port number includes:
providing said first communication device and a second communication device with a pseudo-random number generating algorithm and a seed value.

6. A system for protecting network resources from unauthorized data packet streams, comprising:
first means for communicating over a communication network using data packets,
said first means for communicating including:
means for selecting a first port;
means for selecting a second port;
means for interfacing with said communication network, wherein during a first communication session data packets addressed to said first port are accepted for a first period of time, and wherein data packets addressed to said second port are accepted for a second period of time.

7. The system of Claim 6, further comprising:
second means for communication over said communication network using data packets, said second means for communicating including:
means for selecting said first port;
means for selecting said second port; and
means for interfacing with said communication network, wherein data packets addressed to said first port are accepted for said first period of time, and wherein data packets addressed to said second port are accepted for said second period of time.

8. The system of Claim 7, wherein said means for selecting a first port and said means for selecting a second port of said first means for communicating are synchronized with said means for selecting said first port and said means for selecting said second port of said second means for communicating.

9. The system of Claim 6, wherein said first period of time partially overlaps with said second period of time.

10. The system of Claim 7, wherein data packets sent by a first one of said first and second means for communicating are addressed to said first port of a second one of said first and second means for communicating during an active period of time for said first port, wherein said active period of time for said first port coincides with a portion of said first period of time
